# EUROPEAN PATENT APPLICATION

(11) **EP 2 416 231 A1**
(43) Date of publication of application: **08.02.2012**
(21) Application number: 10758472.4
(22) Date of filing: 23.03.2010
(51) Int. Cl.: G06F 3/041

(54) **INFORMATION INPUT DEVICE AND PRESSURE DETECTION UNIT USED FOR INFORMATION INPUT DEVICE**

(30) Priority: 31.03.2009 JP 2009088329; 31.03.2009 JP 2009088330
(71) Applicant: Nissha Printing Co., Ltd., Kyoto-shi, Kyoto 604-8551 (JP)
(72) Inventor: TAKAI Yuichiro, Kyoto-shi Kyoto 604-8551 (JP); SHIMIZU Jun, Kyoto-shi Kyoto 604-8551 (JP); HIRAI Seiko, Kyoto-shi Kyoto 604-8551 (JP); OMOTE Ryomei, Kyoto-shi Kyoto 604-8551 (JP); KAI Yoshihiro, Kyoto-shi Kyoto 604-8551 (JP); SUZUKI Takahiro, Kyoto-shi Kyoto 604-8551 (JP); ENDO Yuko, Kyoto-shi Kyoto 604-8551 (JP)
(74) Representative: Lemcke, Brommer & Partner
(86) International application number: PCT/JP2010/054964
(87) International publication number: WO 2010/113698

(57) **Abstract**

An information input apparatus 1 includes a panel member 4 having a touch type information input function, a package 2 having a support portion 2b for supporting the panel member 4, a pressure detection portion 5 provided between/across the panel member 4 and the support portion 2b for detecting a pressing operation force to the panel member 4, and an initial load applying portion 6 provided between/across/across the panel member 4 and the support portion 2b and configured to draw the panel member 4 and the support portion 2b toward each other, thereby to apply an initial load to the pressure detection portion 5, so that an information input operation corresponding to a pressing force to the panel member 4 can be performed speedily.

## Description

### Technical Field

The present invention relates to an information input apparatus configured to allow input of information in response to a user's pressing operation on a panel member and corresponding to the pressing force. The invention relates also to a pressure detection unit for use in the information input apparatus.

### Background Art

As an information input apparatus with a touch panel member having an information input function, there is widely used an apparatus with a touch panel disposed on a liquid crystal display. In the case of a digital camera having a liquid crystal monitor, there is known one including a panel member capable of detecting a contact position and a pressing force disposed on the upper face of the liquid crystal display so that different instructions are given depending on the various strengths of the pressing force at the time of contact (See Patent Document 1, Fig. 22 for instance).

Further, in the case of a display apparatus for a car navigation system, there is known an apparatus wherein a touch panel is provided in a surface portion of a liquid crystal display and a pressing force applied to the touch panel is detected for its pressing duration, the number of times of pressing operations, etc, so as to provide different instruction (See Patent Document 2 for instance). Aside from a touch panel, there is also known an apparatus wherein a pressure sensor is disposed under an operation button for effecting e.g. input of characters in a mobile phone for determining a pressure of a pressing operation on this operation button so as to change the size of a character to be inputted, according to the determined pressure value (See Patent Document 3 for instance).

### Prior Art Documents

### Patent Documents

Patent Document 1: Japanese Unexamined Patent Application Publication No. 11-355617
Patent Document 2: Japanese Unexamined Patent Application Publication No. 2006-39745
Patent Document 3: Japanese Unexamined Patent Application Publication No. 2004-177994

### Summary of the Invention

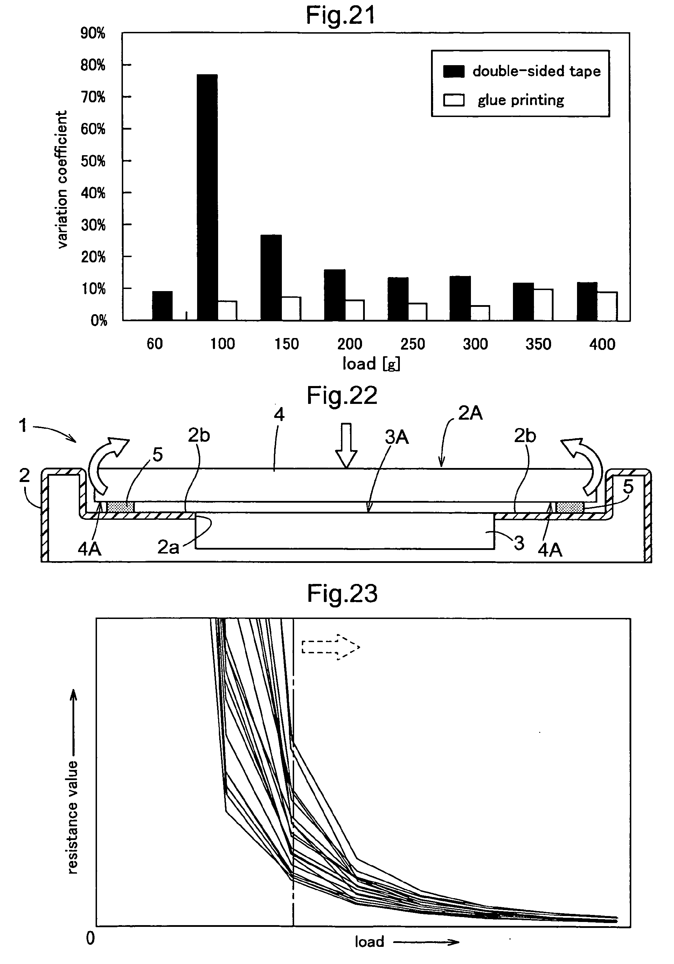

A pressure-sensitive sensor for detecting a pressing pressure to a panel member, as illustrated in Fig. 23, would suffer the problem that in detecting a light load in particular, the sensor exhibits the significant range of error in its detection values (resistance values), thus being unstable in its sensitivity. For this reason, according to the convention, the detection values for light loads having wide error range would not generally be used, but detection values for a predetermined load (the load on the side of the direction of the arrow in Fig. 23) would mainly be employed for control. With this arrangement, however, the light load at the time of initial stage of the pressing operation on the touch panel makes no contribution to information input and information input becomes possible only after a lead having a detection value in the stable range is given. Therefore, speedy information input operation was not possible.

In view of the above, the object of the present invention relating to this application is to obtain an information input apparatus having good response to an information input operation and to obtain also a pressure detection unit for use in the information detection apparatus and having an improved response to an information input operation.

According to the first characterizing feature of an information input apparatus relating to the present invention, the apparatus comprises:
a panel member having a touch type information input function:
   a package having a support portion for supporting the panel member;
   a pressure detection portion provided between/across the panel member and the support portion for detecting pressing operation force to the panel member, and
   an initial load applying portion provided between/across the panel member and the support portion and configured to draw the panel member and the support portion toward each other, thereby to apply an initial load to the pressure detection portion.

With the above arrangement, the initial load applying portion draws the panel member and the support portion toward each other to decrease the distance therebetween, thus reducing the thickness of the pressure detection portion under no-pressure applied state thereof. As a result, an initial load is applied to the pressure detection portion and detection values under the unstable initial stage in the operation are eliminated automatically. When the panel member is pressed, a value detected by the pressure detection portion is within the range of stable detection values of this pressure detecting portion, so this value can be used as it is as an information input value. Therefore, the response is good, so that there is no need for effecting a control for e.g. canceling detection values of the pressure detection section for initial loads within the error range. Further, as the initial load applying portion is configured to apply the initial load to the pressure detection section by drawing the panel member and the support portion toward each other, this initial load applying portion is not to be disposed in the direction which increases the thickness of the information input apparatus. Therefore, the information input apparatus having this initial load applying section can be formed thin also.

According to the second characterizing feature of the information input apparatus relating to the present invention, said initial load applying portion is formed of an elastic member connected to said panel member and said support portion.

With the above-described arrangement, the initial load applying portion can be readily formed of an elastic member. Therefore, the inventive information input apparatus can be manufactured easily and speedily. Incidentally, the elastic member or material to be used as the initial load applying portion can be any of a variety of members or materials, such as an adhesive agent, a double-sided adhesive member, rubber, a torsion coil spring, a plate spring. etc.

According to the third characterizing feature of the information input apparatus relating to the present invention, either between said pressure detection portion and said panel member or between said pressure detection portion and said support portion, there is provided a load transmission portion configured to receive a load from the panel member or the support portion in a concentrated manner and transmit the load to said pressure detection portion in distribution and configured also to allow a posture change of said panel member or said support portion relative to said pressure detection portion.

With the above-described arrangement, when the panel member is pressed, the load transmission portion reliably transmits the load from the panel member or the support portion to the pressure detection portion. Also, even when the peripheral edge of the panel member becomes warped upward at the time of a pressing operation on the panel member, the load transmission portion allows a posture change of the panel member or the support portion relative to the pressure detection portion, so that the load transmission portion can receive the load from the panel member or the support portion in a concentrated manner and transmits this load to the pressure detection portion in distribution, just like when the panel member assumes a horizontal posture. In this way, the pressing operation force to the panel ember is transmitted in a stable manner to the pressure detection portion for detection of its pressure. Hence, the pressing operation force to the panel member can be detected with precision.

According to the fourth characterizing feature of the information input apparatus relating to the present invention, said pressure detection portion and said initial load applying portion are provided at least at a portion of the peripheral edge of said panel member.

With the above-described arrangement, the pressure detection portion and the initial load applying portion are disposed at only a portion of the peripheral edge of the panel member where such pressure detection portion and initial load applying portion need to be provided. Therefore, the structure of the panel member can be made simple.

According to the first characterizing feature of a pressure detection unit relating also to the present invention, a pressure detection unit for use in an information input apparatus comprises:
a first substrate;
a second substrate disposed in opposition to said first substrate;
a pressure detection portion disposed between said first substrate and said second substrate for detecting a mutual pressing force of said first substrate and said second substrate; and
an initial load applying portion provided between/across said first substrate and said second substrate for urging said first substrate and said second substrate toward said pressure detection portion, thereby to apply an initial load.

With the above-described arrangement, the initial load applying portion serves to decrease the distance between the first substrate and the second substrate thereby to reduce the thickness of the pressure detection portion under no-pressure applied state thereof. As a result, an initial load is applied thereto. Hence, even when a force of light load is to be detected, as the initial load is being applied to the pressure detection portion in advance, detection values during the unstable initial stage can be eliminated automatically. This serves also to minimize the error range of the detection values (resistance values) relative to the loads, so that precision in the pressure determination can be improved.
Further, the pressure detection unit integrally incorporates the pressure detection portion and the member which applies the initial load, altogether therein. Hence, in manufacturing an information input apparatus provided with a panel member having a touch-type information input function, there is no need to dispose, in the information input apparatus per se, any arrangement corresponding to an elastic member for applying the initial load. Therefore, the construction of the information input apparatus can be made simple. Moreover, as the member for applying the initial load is configured to apply this initial load by drawing the first substrate and the second substrate toward each other, the thickness of the pressure detection unit can be smaller than an arrangement of applying the initial load to the pressure detection portion by pressing the first substrate or the second substrate from the outside thereof.

According to the second characterizing feature of the pressure detection unit relating to the present invention, said initial load applying portion comprises an elastic member connected to said panel member and said support portion.

With the above-described arrangement, the initial load applying portion can be readily formed of an elastic member. Incidentally, the elastic member or material to be used as the initial load applying portion can be any of a variety of members or materials, such as an adhesive agent, a double-sided adhesive member, rubber, a torsion coil spring, a plate spring. etc.

According to the third characterizing feature of the pressure detection unit relating to the present invention, said pressure detection portion includes a pair of electrodes disposed between said first substrate and said second substrate and a conductive pressure-sensitive ink disposed between said pair of electrodes and has electric characteristics which varies in accordance with a load applied from the outside.

With the above-described arrangement, the pair of electrodes and the conductive pressure-sensitive ink together constituting the pressure detection portion can be applied to the first substrate and the second substrate with using the standard printing technique. Hence, the thickness of the pressure detection portion can be smaller. As a result, the pressure detection unit as a whole can be formed thinner.

According to the fourth characterizing feature of the pressure detection unit relating to the present invention, said pressure detection portion includes a pair of electrodes disposed on one of said first substrate and said second substrate and a conductive pressure-sensitive ink disposed on the other of said first substrate and said second substrate and has electric characteristics which varies in accordance with a load applied from the outside.

With the above-described arrangement, the pair of electrodes and the conductive pressure-sensitive ink together constituting the pressure detection portion can be applied with using the standard printing technique in such a manner as to cover the pair of electrodes disposed on one of the first substrate and the second substrate. Hence, as the electrode layer is formed as a single layer, the thickness of the pressure detection portion can be made even smaller. As a result, the pressure detection unit as a whole can be formed even thinner. If comb electrodes are employed as the pair of electrodes disposed on the one substrate, the contact area between the electrodes and the conductive pressure-sensitive ink can be made greater for facilitating sensitivity adjustment as well.

According to the fifth characterizing feature of the pressure detection unit relating to the present invention, the unit further comprises a load transmission portion provided on at least one of the outer face of said first substrate and the outer face of said second substrate and formed with an area smaller than the contact area between said pressure detection portion and said first substrate or said second substrate.

With the above-described arrangement, when an external load is applied to the pressure detection unit, as the load transmission portion supports the pressure detection portion to receive this external load in a concentrated manner, without dispersing thereof and to transmit this load to the pressure detection portion in a reliable manner. In this way, as the pressure detection portion is pressed reliably, the precision in the pressure determination of the pressure detection unit can be improved.

According to the sixth characterizing feature of the pressure detection unit relating to the present invention, said load transmission portion has a cross section area which is progressively decreased away from the outer surface of either the first substrate or the second substrate on which the load transmission portion is disposed.

With the above-described arrangement, the load transmission portion allows a certain amount of posture change of the pressure detection portion and an external member (e.g. a panel member) for pressing the pressure detection portion. Therefore, in the event of small posture change between the pressure detection portion and the external member, the load transmission portion restricts dispersing of the load from the outside to other portions than the pressure detection portion.

### Brief Description of the Drawings

[Fig. 1] is a perspective view of an information input apparatus,
[Fig. 2] is a section along II-II in Fig. 1,
[Fig. 3] is an enlarged view showing vicinity of a pressure detection portion shown in Fig. 2,
[Fig. 4] is a view showing layouts of the pressure detection portion and an initial load applying portion of the information input apparatus,
[Fig. 5] is a section showing principal portions of an information input apparatus according to a further embodiment,
[Fig. 6] is a section showing principal portions of an information input apparatus according to a further embodiment,
[Fig. 7] is a section showing principal portions of an information input apparatus according to a further embodiment,
[Fig. 8] is a section showing principal portions of an information input apparatus according to a further embodiment,
[Fig. 9] is a section showing principal portions of an information input apparatus according to a further embodiment,
[Fig. 10] is a section showing principal portions of an information input apparatus according to a further embodiment,
[Fig. 11] is a view showing layouts of the pressure detection portion and an initial load applying portion of the information input apparatus according to a further embodiment,
[Fig. 12] is a perspective view of an information input apparatus including a pressure detection unit according to the present invention,
[Fig. 13] is a section along XIII-XIII in Fig. 12,
[Fig. 14] is a view showing layout of the pressure detection unit in the information input apparatus,
[Fig. 15] is an enlarged view of vicinity of the pressure detection unit shown in Fig. 13,
[Fig. 16] is a view showing Embodiment Mode 3 of the pressure detection unit,
[Fig. 17] is a view showing operational condition of the pressure detection unit of Embodiment Mode 3,
[Fig. 18] is a view showing a sample used in an effect confirming test,
[Fig. 19] is a graph showing relationship between resistance values and loads in examples (samples S1-S15),
[Fig. 20] is a graph showing relationship between resistance values and loads in comparison examples (samples S16-S30),
[Fig. 21] is a graph showing relationships between variation coefficients and loads in samples S1-S30,
[Fig. 22] is a section view of an information input apparatus according to the prior art, and
[Fig. 23] is a graph showing relationship between loads and resistance values of a pressure-sensitive sensor.

### Modes of Embodying the Invention

Next, an embodiment of an information input apparatus 1 relating to the present invention will be described with reference to the drawings.

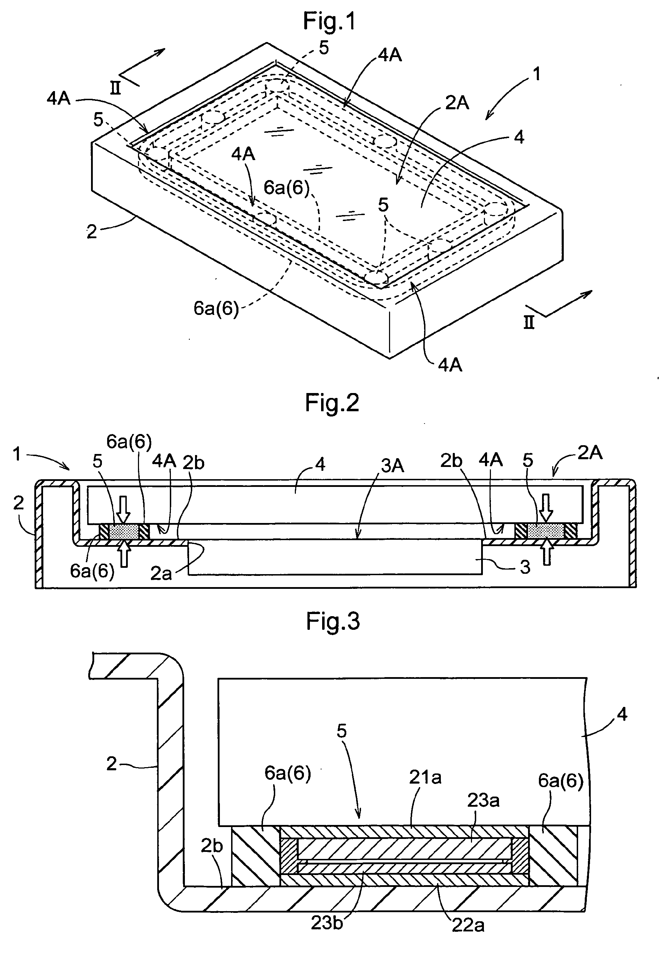

As shown in Fig. 1 and Fig. 2, in the information input apparatus 1, within a package 2 forming an opening portion 2A in its front face, there are mounted a display device 3 having a display portion 3A of e.g. liquid crystal, organic EL, etc, and a panel member 4 having a touch type information input function.

In the present invention, as shown in Fig. 2, the opening portion 2A of the package 2 is formed by cutting away the upper face of the package 2 in such a manner to provide a step allowing fitting of the panel member 4 therein. And, in the bottom face, there are provided a display device opening portion 2a for exposing the display portion 3A of the display device 3 mounted within the package 2 to the outside and a frame-like support portion 2b for supporting a peripheral edge 4A of the panel member 4.

The shape and size of the opening portion 2A can vary depending on the shape and size of the panel member 4. Also, the mounting depth of the opening portion 2A can vary depending on e.g. the thickness of the panel member 4. Further, the shape and size of the display device opening portion 2a of the opening portion 2A can vary depending on e.g. the shape and size of the display portion 3A. In this embodiment, the opening portion 2A, the display device opening portion 2a, the display portion 3A and the panel member 4 have a rectangular or approximately rectangular shape. However, the shape of e.g. the panel member 4 is not particularly limited, and it can be e.g. circular. The mounting depth of the opening portion 2A should be set such that the surface of the package 2 be located at a substantially same level as the surface of the panel member 4.

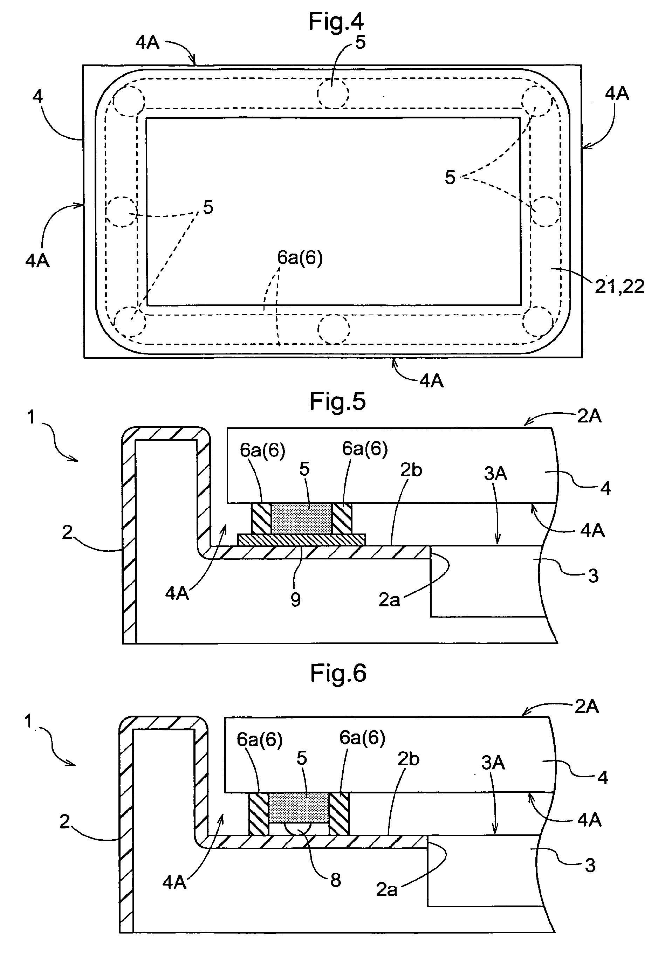

The information input apparatus 1 includes a pressure detection means for detecting a pressing operation force applied to the panel member 4. This pressure detection means comprises a pressure detection portion 5 provided between/across the panel member 4 and the support portion 2b of the package 2, and an unillustrated signal processing circuit or the like for processing output signals from this pressure detection portion 5. The construction of the pressure detection portion 5 is not particularly limited as long as it is capable of detecting the pressing force. As shown in Fig. 1 and Fig. 4, the pressure detection portion 5 is provided at least one or more in a peripheral edge 4A of the panel member 4. This pressure detection means can be provided as one having a so-called touch input function for detecting X-Y coordinates of an operation position of a touch operation to the panel member 4. Further, in the case of one having the touch input function, this can be selected from the resistive film type, the capacitance type, and electromagnetic induction type, etc.

As shown in Figs. 1-4, an initial load applying portion 6 for applying an initial load to the pressure detection portion 5 includes a tension member 6a. And, a pair of such initial load applying portions 6 are disposed adjacent the opposed sides of the pressure detection portions 5. The tension member 6a is clamped between the panel member 4 and the support portion 2b so as to draw the panel member 4 and the support portion 2b toward each other. The tension member 6a is provided as e.g. a non-elastic spacer (this can be an elastic agent including an adhesive layer between the panel member 4 and the support portion 2b) having a thickness smaller than the thickness of the pressure detection portion 5. In operation, when deformation of the panel member 4 or the support portion 2b is to be allowed, the pressure detection portion provided with the initial load by the panel member 4 or the support portion 2b is further compressed for detection of the pressing force. Further, the tension member 6a can also be an adhesive agent or double-sided adhesive having elasticity or can also be an elastic member such as rubber, a tension coil spring, a plate spring, etc. which is set under a state for exerting a tensile force.

The tension member 6a is set between the panel member 4 and the support portion 2b, with its thickness being rendered smaller than the thickness the pressure detection portion 5 under its no-pressure applied state. As the tension member 6a set as above will tend to regain its original thickness, thereby to draw the panel member 4 and the support portion 2b toward each other. In this way, the distance between the panel member 4 and the support portion 2b is reduced and the thickness under the no-pressure applied state of the pressure detection portion 5 is reduced, as a result, an initial load is applied to the pressure detection portion 5.

With the above-described construction of the initial load applying portion 6, an initial load is applied to the pressure detection portion 5 prior to a pressing operation on the panel member 4. Thereafter, when the panel member 4 is press-operated, a value detected by the pressure detection portion 5 can be employed for information input control. Further, as the thickness of the tension member 6a is smaller than the thickness of the pressure detection portion 5 under its no-pressure applied state, the elastic member 6a does not increase the thickness of the information input apparatus 1.

The construction of the pressure detection portion 5 is not particularly limited. However, as one example thereof, a pressure detection portion 5 using pressure sensitive ink will be described next. Referring more particularly to the pressure detection portion 5 with reference to Fig. 3 and Fig. 4, between a frame-like upper electrode 21a and a frame-like lower electrode 22a disposed in opposition to the upper electrode 21a, there are disposed a dot-like upper pressure sensitive ink 23a and a dot-like lower pressure sensitive ink 23b. The upper pressure sensitive ink 23a is disposed so as to cover the upper electrode 21a and the lower pressure sensitive ink 23b is disposed so as to cover the lower electrode 22a and in opposition to the upper pressure sensitive ink 23a. The pressure sensitive ink portion of the electrode is designed to be slightly smaller than the printed size of the pressure sensitive ink. However, the size or the like thereof is not particularly limited as long as the electrode portion does not directly contact the electrode disposed on the opposing substrate. The pressure detection portion 5 is affixed to the lower face of the panel member 4 via an adhesive agent such as glue or an adhesive layer such as a double-sided adhesive tape. The thickness size of the upper electrode 21a and the lower electrode 22a is set to range from 10 µm to 20 µm, for example. The thickness size of the upper pressure sensitive ink 23a and the lower pressure sensitive ink 23b is set to range from 15 µm to 35 µm, for example. Incidentally, as to the pressure sensitive ink, only one layer of them, i.e. the upper or the lower ink alone, may be provided. The shape of the pressure sensitive ink is not limited to the dot-like shape, but can be circular, rectangular or frame-like in the plan view thereof. Regarding the electrodes too, they need not be disposed in the frame-like manner, but can be individually disposed on frame-like substrates. Further, the electrodes need not be disposed on both of the upper and lower faces of the pressure sensitive ink, but may be disposed on only one of the upper and lower faces thereof. In that case, the pair of electrodes may be provided as comb electrodes or helical electrodes to control the area of contact with the pressure sensitive ink, whereby signals in a desired detection range can be obtained.

The material forming the upper electrode 21a and the lower electrode 22a can be a conductive paste containing a metal such as gold, silver, copper, nickel, etc. or carbon or of a mixture containing a plurality of kinds of these materials. The method for forming these electrodes can be a printing technique such as screen printing, offset printing, gravure printing, or flexo printing, photoresist technique, etc. Further, the upper electrode 21a and the lower electrode 22a can also be formed by affixing a metal foil of copper, gold, etc. Moreover, the upper electrode 21a and the lower electrode 22a can be formed by forming an electrode pattern with resist on an FPC plated with a metal such as copper and then etching the portion of the metal foil not protected by the resist. The upper electrode 21a and the lower electrode 22a can be formed by any combination of the above-cited forming techniques or by laminating technique.

The composition constituting the upper pressure sensitive ink 23a and the lower pressure sensitive ink 23b is comprised of a material whose electric characteristics such as an electric resistance value varies according to an external force. As such composition, it is possible to employ e.g. quantum tunneling effect composite material (commercial name "QTC") manufactured by Peratech Ltd. in U.K. The upper pressure sensitive ink 23a and the lower pressure sensitive ink 23b can be disposed on the upper electrode 21a and the lower electrode 22a by means of application technique. As such application technique for the upper pressure sensitive ink 23a and the lower pressure sensitive ink 23b, a printing technique such as screen printing, offset printing, gravure printing, flexo printing, etc.. may be employed. The pressure sensitive ink may be applied only one face of the upper electrode 21a or the lower electrode 22a.

The upper electrode 21a and the lower electrode 22a are connected to a connector (not shown) and this connector is connected to a pressing detection portion (not shown) incorporated within the information input apparatus 1. With the pressure detection portion 5 having the above-described construction in operation, under the normal (no pressure applied) state, no pressure is applied to the upper pressure sensitive ink 23a or the lower pressure sensitive ink 23b. Under this condition, if a pressing operation force is applied to the touch input face of the panel member 4 disposed on the pressure detection portion 5, this pressing operation force brings the upper pressure sensitive ink 23 and the lower pressure sensitive ink 23b into pressurized contact with each other. With this pressurized contact, there occur reductions in the electric resistance values and contact resistance values of the upper pressure sensitive ink 23a and the lower pressure sensitive ink 23b. Then, by detecting these change in the resistance, the pressing operation force to the touch input face of the panel member 4 can be detected.

Further, in correspondence with increase in the pressing operation force applied to the touch input face of the panel member 4, the external force applied to the upper pressure sensitive ink 23a and the lower pressure sensitive ink 23b increases. As a result, there occur further reductions in the electric resistance value and the contact resistance values. Then, by detecting such resistance changes, the external force applied to the upper pressure sensitive ink 23a or the lower pressure sensitive ink 23b can be detected and the pressing operation force applied to the touch input face of the panel member 4 can be detected.

**[Further Embodiments of Information Input Apparatus]**
(1) In the foregoing embodiment, the initial load is applied to the pressure detection portion 5 by setting the thickness of the tension member 6a smaller than the thickness of the pressure detection portion under its no-pressure applied condition. However, if it is not possible to reduce the thickness of the tension member smaller than that of the pressure detection portion 5 under the normal condition due to e.g. the material forming this tension member 6a, the application of the initial load to the pressure detection portion 5 can be realized by reverse arrangement of increasing the thickness of the pressure detection portion 5 greater than the thickness of the tension portion 6a. Incidentally, for such increase of the thickness of the pressure detection portion 5, the upper electrode 21a and the lower electrode 22a or the pressure sensitive ink 23a, 23b may be applied or printed in greater thickness than usual or applied or printed in superposition, etc.

(2) The pressure detection portion 5 may be fixedly attached to the panel member 4 to form a portion of an integrated panel unit. Further, as shown in Fig. 5, the tension member 6a, together with the pressure detection portion 5, may be fixedly attached to the panel member 4 to form a portion of an integrated panel unit. To a panel unit having the pressure detection portion 5 fixedly attached to the panel member 4, as shown in Fig. 5, a plate-like member 9 formed of a hard material, a non-elastic material, etc. is attached to the outer side of the pressure detection portion 5. With the panel unit constructed as above, it is possible to eliminate the trouble of providing the pressure detection portion 5 or the tension member 6a as the initial load applying portion 6, at the time of assembly of the information input apparatus 1. Therefore, with this, it becomes also possible to reduce the manufacture costs or to simplify the manufacture process.

(3) As shown in Fig. 6 through Fig. 8, between the pressure detection portion 5 and the panel member 4 or between the pressure detection portion 5 and the support portion 2b, there is preferably provided a load transmission portion 8 configured to receive the load from the panel member 4 or the support member 2b in a concentrated manner and transmit this load in distribution to the pressure detection portion 5 and also to allow a posture change of the panel member 4 or the support portion 2b relative to the pressure detection portion 5. In Fig. 6, between the panel member 4 and the support portion 2b, there are provided the pressure detection portion 5 and the convex load transmission portion 8 in this mentioned order. And, between the pressure detection portion 5 and the side portions of the convex load transmission portion 8, the tension portions 6a are disposed and the pressure detection portion 5, the tension portions 6a, the plane-like member 9 and the convex load transmission portion 8 are fixedly attached to the panel member 4. In any case, the convex load transmission portion 8 receives the load from the support portion 2b in a concentrated manner and transmits this load to the pressure detection portion 5 in distribution.

Even if the peripheral edge 4A of the panel member 4 becomes warped upwards during a pressing operation of the panel member 4, the area of contact between the convex load transmission portion 8 and the support portion 2b changes little, and a posture change of the support portion 2b relative to the pressure detection portion 5 is allowed. Therefore, the convex load transmission portion 8, just like the time when the panel member 4 assumes a horizontal posture, receives the load from the support portion 2b in a concentrated manner and transmits this load to the pressure detection portion 5 in distribution. In this way, as the load from the support portion 2b is transmitted to the pressure detection portion 5 in a reliable manner and the pressure is detected thereby, the pressing operation force applied to the panel member 4 can be detected with precision.

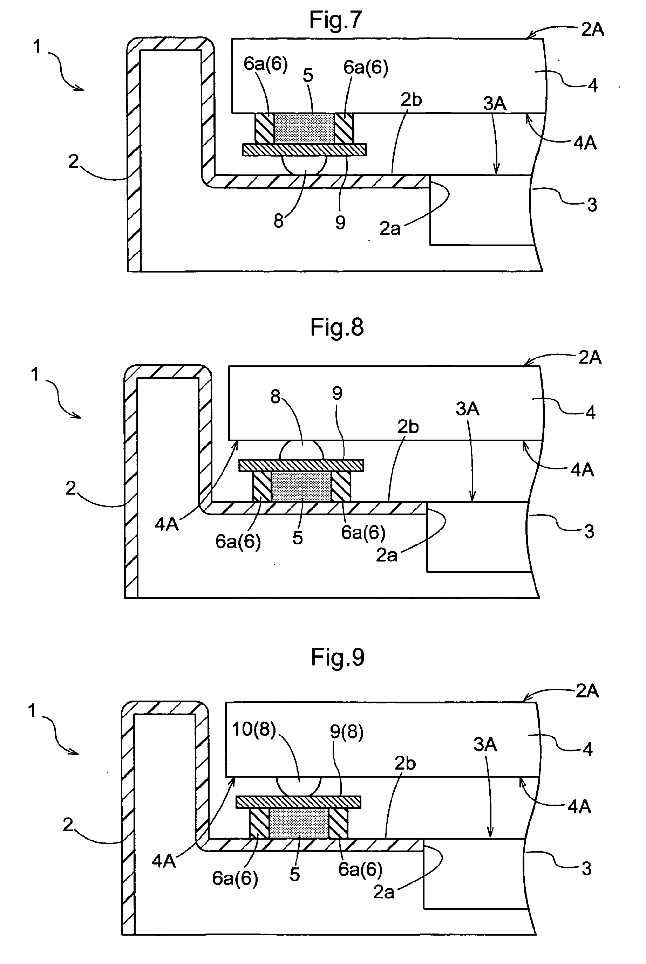

In the arrangement shown in Fig. 8, between the panel member 4 and the support portion 2b, the convex load transmission portion 8 and the plate member 9, the pressure detection portion 5 and the tension members 6a are disposed and these are fixedly attached to the support portion 2b. In this case, the convex load transmission portion 8 receives the load from the panel member 4 in a concentrated manner and transmits this load to the pressure detection portion in a distribution.

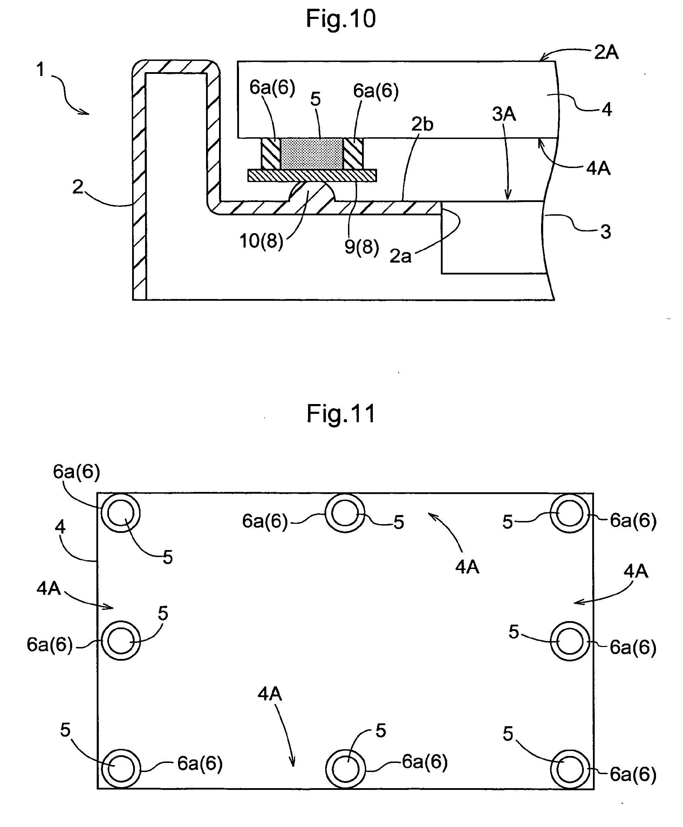

(4) The load transmission portion 8, as shown in Fig. 9, may comprise a convex portion 10 formed on the rear face of the panel member 4 and the plate-like member 9. Or, as shown in Fig. 10, the load transmission portion 8 may comprise a convex portion 10 formed on the support portion 2b and the plate-like member 9. In the arrangement shown in Fig. 9, between the panel member 4 and the support member 2b, the convex portion 10, the plate-like member 9, the pressure detection portion 5, and the tension portions 6a are disposed, and the plate-like member 9, the pressure detection portion 5 and the tension members 6a are fixedly attached to the support portion 2b. The convex portion 10 is fixed to the panel member 4 and this convex portion 10 transmits the load from the panel member in a concentrated manner to the plate-like member 9 and transmits it to the pressure detection portion 5 in distribution. Further, in the arrangement shown in Fig. 10, between the panel member 4 and the support portion 2b, the pressure detection portion 5, the tension members 6a, the plate-like member 9 and the convex portion 10 are disposed, and pressure detection portion 5, the tension members 6a and the plate-like member 9 are fixedly attached to the panel member. In this case, the convex portion 10 transmits the load from the support portion 2b in a concentrated manner and transmits it to the pressure detection portion 5 in distribution.

(5) The pressure detection portion 5 and the initial load applying portion 6 may be provided at least in some limited portions of the peripheral edge 4A of the panel member 4. And, the initial load applying portion 6, as shown in Fig. 4, should be disposed preferably adjacent the pressure detection portion 5. If the initial load applying portion 6 is provided in a limited portion of the peripheral edge 4A of the panel member 4, this initial load applying portion 6 can be provided only at a portion where it is really needed. Hence, in case the pressure detection portion 5 to be provided in the panel member 4 is limited, the above arrangement is advantageous in the manufacture of the information input apparatus 1.

(6) The initial load applying portion 6, as shown in Fig. 11, may be provided in the entire peripheral edge 4A of the panel member 4. In case e.g. a great number of pressure detection portions 5 are to be disposed for the panel member 4, it may sometimes be easier to provide the initial load applying portions 6 in the entire peripheral edge 4A of the panel member 4 t than to provide them in only some limited portion of the peripheral edge 4A of the panel member 4. Further, though not shown, together with the initial load applying portions 6, the pressure detection portion 5 may be provided in the entire peripheral edge 4A of the panel member 4.

Next, Embodiment Mode 1 of a pressure detection unit relating to the present invention will be described with reference to the accompanying drawings.

### [Embodiment Mode 1 of Pressure Detection Unit]

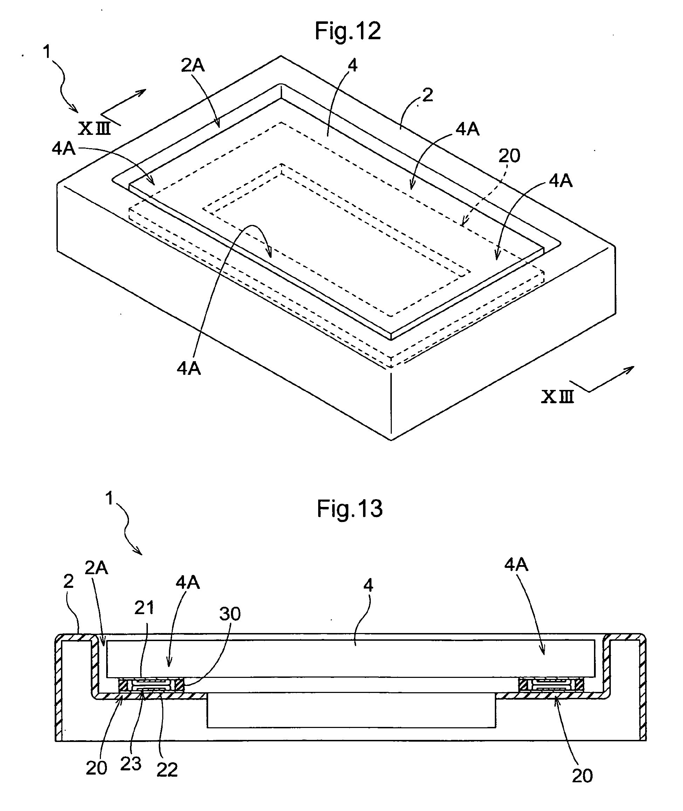

First, the construction of an information input apparatus 1 mounting a pressure detection unit 20 will be explained with reference to Figs. 12-15. As shown in Fig. 12 and Fig. 13, the information input apparatus 1 includes a package 2 forming an opening portion 2A, etc. in its front face, a panel member 4 having a touch-type information input function, and a pressure detection means including the pressure detection unit 20 for detecting a pressing operation force applied to the panel member 4.

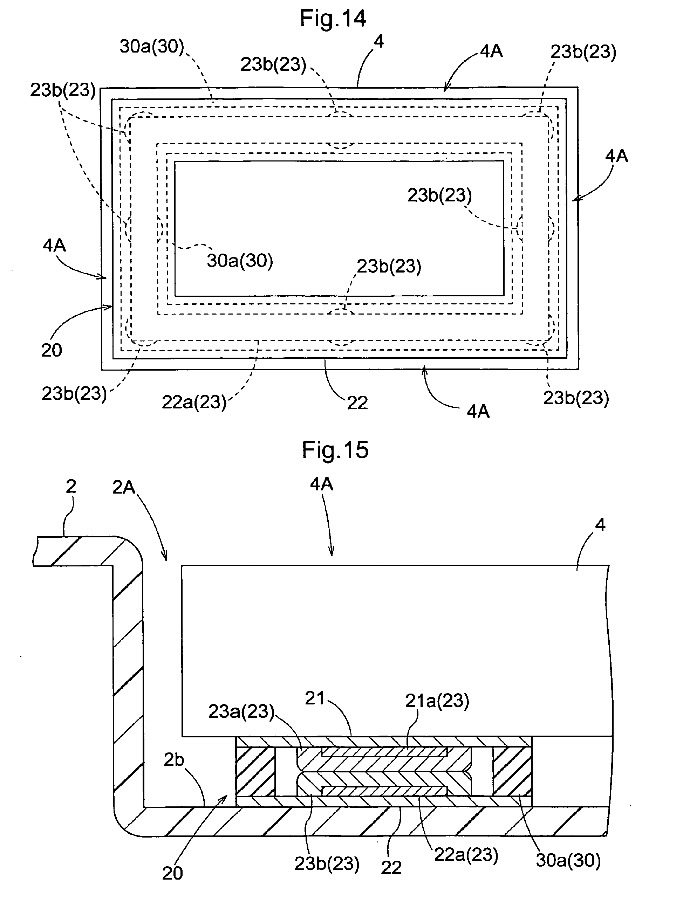

The pressure detection means, as shown in Fig. 15, includes the pressure detection unit 20 disposed between/across the panel member 4 and a support portion 2b of the package 2 and an unillustrated signal processing circuit or the like for processing output signals form the pressure detection unit 20. As the pressure detection means, there can be employed e.g. one having the so-called touch input function for detecting X-Y coordinates of an operation position of a user's touch operation on the panel member 4. With this, convenience of the apparatus can be enhanced. Further, in the case of one having the touch input function, this can be selected from the resistive film type, the capacitance type, and electromagnetic induction type, etc.

Next, the construction of the pressure detection unit 20 will be explained. As shown in Fig. 15, the pressure detection unit 20 includes a first substrate 21, a second substrate 22 disposed in opposition to the first substrate 21, a pressure detection portion 23 disposed between the first substrate 21 and the second substrate 22, and a member 30 disposed between/across the first substrate 21 and the second substrate 22 for applying an initial load to the pressure detection portion 23. The pressure detection portion 23 detects a mutually pressing force of the first substrate 21 and the second substrate 22.

As shown in Fig. 14 and Fig. 15, the pressure detection unit 20 for use in the information input apparatus 1 includes, the frame-like first substrate 21 and the frame-like second substrate 22 disposed in opposition to the first substrate 21. The inner diameters of the frame-like first substrate 21 and the second substrate 22 are caused to match the size of the opening portion 2A and their outer diameters are caused to match an X-Y coordinates detection device (not shown) provided separately. On the face of the first substrate 21 opposed to the second substrate 22, an upper electrode 21a is disposed in the form of a frame. On the face of the second substrate 22 opposed to the first substrate 21, a lower electrode 22a is disposed in the form of a frame in opposition to the upper electrode 21a. At the corner portions and peripheral edge portions of the first substrate 21, there are disposed dot-like upper pressure-sensitive ink 23a so as to cover the upper electrode 21a. Similarly, in the case of the second substrate 22 too, at the corner portions and peripheral edge portions of the second substrate 22, there are disposed dot-like lower pressure sensitive ink 23b so as to cover the lower electrode 22a and in opposition to the upper pressure sensitive ink 23a. The pressure sensitive ink portions of the electrodes are designed to be slightly smaller than the printed size of the pressure sensitive ink. However, as long as consideration is given so as to avoid direct contact of the electrode portion with the electrode disposed on the opposed substrate, the size etc. is not particularly limited. The pressure detection unit 20 is mounted to the opening portion 2A as the second substrate 22 is affixed on the support portion 2b with e.g. adhesive agent.

The pressure detection portion 23 includes the upper electrode 21a formed on the first substrate 1, the lower electrode 22a formed on the second substrate 22 in opposition to the upper electrode 21a, the upper pressure sensitive ink 23a formed on the upper electrode 21a, and the lower pressure sensitive ink 23b formed on the lower electrode 22a in opposition to the upper pressure sensitive ink 23a.

The initial load applying portion 30 includes a tension member 30a and is disposed in the area where the first substrate 21 and the second substrate 22 are opposed to each other and in the peripheral edge of the pressure detection portion 23. The tension member 30a is disposed as being clamped between the first substrate 21 and the second substrate 22 and is configured to urge the first substrate 21 and the second substrate 23 toward the pressure detection portion 23. The tension member 30a is provided as e.g. a non-elastic spacer whose thickness is set smaller than the pressure detection portion 23 (can be adhesive agent per se including the adhesive layer to the substrates 21, 22). And, when the deformation of the first substrate 21 or the second substrate 22 is allowed, the pressure detection portion 23 applied with the initial load is further compressed by the first substrate 21 or the second substrate 22 for detecting the pressing force. Further, the tension member 30a can also be an adhesive agent or double-face adhesive material having elasticity or can be any of various kinds of elastic member such as a rubber, a tension coil spring set under a condition for applying a tensile force. Incidentally, in Fig. 15, the pressure detection portion 23 and the initial load applying portion 30 are spaced apart from ach other. Instead, the pressure detection portion 23 and the initial load applying portion 30 can be placed in partial contact with each other.

In the above, the tension member 30a is configured such that under its free state, its thickness is smaller than the thickness of the pressure detection portion 23. The tension member 30a set as above is subject to a force that tends to retain its original thickness. And, this force serves to bring the first substrate 21 and the second substrate 22 toward each other. In this way, as the distance between the first substrate 21 and the second substrate 22 is reduced and the thickness of the pressure detection portion 23 under the no-pressure applied state is made smaller, an initial load is applied to the pressure detection portion 23.

Next, operations of the pressure detection unit 20 mounted in the information input apparatus 1 will be explained. Inside the information input apparatus 1, the upper electrode 21a and the lower electrode 22a are connected to a connector (not shown), and this connector is connected to a load detection portion (not shown) incorporated in the information input apparatus.

A change in the resistance applied to the upper pressure sensitive ink 23a and the lower pressure sensitive ink 23b of the pressure detection portion 23 when the panel member 4 is pressed is detected. With this detection of change in the resistance, the external force applied to the two pressure sensitive inks 23a, 23b can be detected and the load to the panel member 4 can be detected.

In the above, as the pressure detection unit 20 is provided with the tension member 30a, an initial load is applied to the pressure detection portion 23 prior to the pressing operation of the panel member 4. Thus, the load range from the zero load to the stable detection load which range suffers much detection irregularity can be omitted, so that the detected load can be used as it is for control of information input.

The first substrate 21 and the second substrate 22 of the pressure detection unit 20 can be formed of e.g. a film made of a material such as a material usable for a flexible substrate. As some non-limiting examples thereof, general-purpose resins, such as polyethylene terephthalate, polystyrene resin, polyolefin resin, ABS resin, AS resin, acrylic resin, AN resin can be cited. Further, general-purpose engineering resin such as polystyrene resin, polycarbonate resin, polyacetal resin, polycarbonate modified polyphenylene ether resin, polybutylene terephthalate resin, ultrahigh molecular weight polyethylene resin, or a super engineering resin such as polysulfone resin, polyphenylene sulfide resin, polyphenylene oxide resin, polyarylate resin, polyetherimide resin, polyimide resin, liquid crystal polyester resin, polyacrylic resin, can also be employed.

As the material for forming the upper electrode 21a and the lower electrode 22a of the pressure detection portion 23, a conductive paste containing a metal such as gold, silver, copper, or nickel, or carbon, or a mixture of a plurality of these can be employed. The method for forming the upper electrode 21a and the lower electrode 22a on the first substrate 21 and the second substrate 22 can be a printing technique such as screen printing, offset printing, gravure printing, or flexo printing, photoresist technique, etc. Further, the upper electrode 21a and the lower electrode 22a can also be formed by affixing a metal foil of copper, gold, etc. Moreover, the upper electrode 21a and the lower electrode 22a can be formed by forming an electrode pattern with resist on an FPC plated with a metal such as copper and then etching the portion of the metal foil not protected by the resist. The upper electrode 21a and the lower electrode 22a can be formed by any combination of the above-cited forming techniques or by laminating technique.

The composition constituting the upper pressure sensitive ink 23a and the lower pressure sensitive ink 23b is comprised of a material whose electric characteristics such as an electric resistance value varies according to an external force. As such composition, it is possible to employ e.g. quantum tunneling effect composite material (commercial name "QTC") manufactured by Peratech Ltd. in U.K. The upper pressure sensitive ink 23a and the lower pressure sensitive ink 23b can be disposed on the upper electrode 21a and the lower electrode 22a by means of application technique. As such application technique for the upper pressure sensitive ink 23a and the lower pressure sensitive ink 23b, a printing technique such as screen printing, offset printing, gravure printing, flexo printing, etc.. may be employed. The pressure sensitive ink may be applied only on one face of the upper electrode 21a or the lower electrode 22a.

The pressure detection unit 20 is affixed to the lower face of the panel member 4 of the information input apparatus 1 by means of an adhesive agent such as glue or an adhesive layer such as a double-sided tape and at least one such unit is disposed to be concealed within an ornamental portion of the peripheral edge 4A of the panel member 4. Therefore, the respective materials for forming the pressure detection unit 20 are not limited to transparent materials but can be colored materials.

### [Embodiment Mode 2 of Pressure Detection Unit]

In Embodiment Mode 1, explanation was made with using the pressure detection portion 23 including the pair of electrodes 21a, 22a disposed between the first substrate 21 and the second substrate 22 and the pressure sensitive inks disposed between the pair of electrodes. Instead, the pressure detection portion 23 can be configured such that a pair of electrodes disposed on either one of the first substrate 21 and the second substrate 22 and the pressure sensitive inks disposed on the other one first or second substrate to cover the pair of electrodes. With this configuration,
the thickness of the pressure detection portion can be made even smaller. As a result, the pressure detection unit 20 as a whole can be formed even thinner. If the pair of electrodes are provided in the form of combs or helix to control the contact area with the pressure sensitive inks, signals in the desirable detection range can be obtained.

### [Embodiment Mode 3 of Pressure Detection Unit]

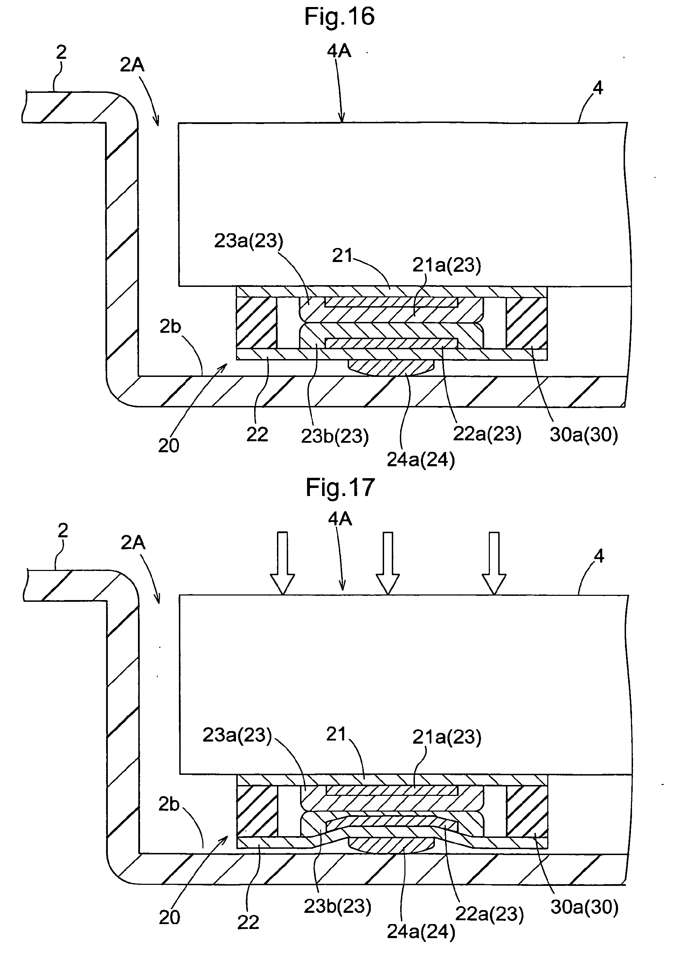

As shown in Fig. 16, on the outer face of the second substrate 22, a bump 24a as a load transmission portion 24 can be provided. The disposing area of the bump 24a is set to be smaller than the contact area relative to the second substrate of the pressure detection portion 23. When an external load is applied to the pressure detection portion 23, the bump 24a supports the pressure detection portion 23 from under to transmit this load to the pressure detection portion 23 in a concentrated manner (Fig. 17). As the possible construction of the pump 24a, thermosetting resin or UV setting resin can be disposed by printing or applying and then hardened. Or, it can be a film or a resin plate cut in dimensions to fit the pressure detection portion and affixed thereto or a foam member such as PE foam or urethane foam, or a double-sided adhesive or double-side tape, etc. The bump 24a can be provided on the outer face of the first substrate 21 or can be provided on the outer faces of the both of the first substrate 21 and the second substrate 22. In this, the height dimension of the bump 24a ranges e.g. from 50µ m to 200 µm (including the thickness of the adhesive layer to be adhered to the second substrate 22). Preferably, the bump 24a is disposed on the back face side (immediately below) of the position where the pressure detection portion 23 is provided. With this arrangement, the upper pressure sensitive ink 23a and the lower pressure sensitive ink 23b can be pressed against each other in a reliable manner, whereby the precision in the pressure determination of the pressure detection unit 20 can be improved.

### [Embodiment Mode 4 of Pressure Detection Unit]

Preferably, as shown in Fig. 16, the bump 24a is formed in such a manner that its cross section area decreases as it extends away from the outer face of the second substrate 22 on which it is disposed. With this, a certain degree of posture change between the pressure detection portion 23 and an external member (e.g. the panel member, etc.) which presses the pressure detection portion 23 will be allowed. Therefore, in the case of small posture change between the pressure detection portion 23 and the external member, the bump 24a serves to restrict dispersion of the load from the outside to the other portions than the pressure detection portion 23. Incidentally, the bump 24a can be a non-elastic member or an elastic member.

**[Further Embodiments of Pressure Detection Unit]**
(1) In the foregoing embodiment, an initial load is applied to the pressure detection portion 23 by rendering the thickness of the tension member 30a smaller than the thickness of the pressure detection portion 23 under its no-load applied state. However, when it is not possible to render its thickness smaller than the thickness of the pressure detection portion 23 under its normal state, the initial load can be applied to the pressure detection portion 5 by the reverse arrangement of rendering the thickness of the pressure detection portion 23 greater than the thickness of the tension member 30a. Incidentally, in order to increase the thickness of the pressure detection portion 23, the upper electrode 21a, the lower electrode 22a or the pressure sensitive inks 23a, 23b will be applied in a greater thickness than usual or in superposition, etc.

(2) In Embodiment Mode 1 described above, explanation was made with using the pressure detection portion 23 including the pair of electrodes and the two layers of pressure sensitive ink 23a, 23b disposed between these electrodes. However, the construction of the pressure detection portion 23 is not particularly limited as long as it can detect a pressing force. And, the pressure sensitive ink can be a single layer. Further, the shape of the pressure sensitive ink is not limited to the dot-like shape, but can be circular, rectangular or frame-like in its plan view. Further, the electrodes of the pressure detection portion 23 need not necessarily be disposed like a frame. Instead, they may be disposed individually on a frame-like substrate.

(3) In Embodiment Mode 1 described above, the upper pressure sensitive ink 23a or the lower pressure sensitive ink 23b is disposed at the respective corners of the first substrate 21 or the second substrate 22. However, the present invention is not limited thereto. The upper pressure sensitive ink 23a or the lower pressure sensitive ink 23b can be disposed like spots along the peripheral edge of the first substrate 21 or the second substrate 22. As shown in Fig. 14, the upper pressure sensitive ink 23a and the lower pressure sensitive ink 23b can be disposed in right-to-left symmetry and equidistantly. With this arrangement or layout, in the case of a construction having the function of detecting X-Y coordinates of an operation position of a user's touch operation on the panel member 4, the detection of the X-Y coordinates will be facilitated and the convenience of the apparatus will be enhanced.

(4) In Embodiment Mode 1 described above, the pressure detection unit 20 is affixed to the lower face of the panel member 4. Instead of this, the pressure detection unit 20 can be affixed not to the panel member 4, but to the support portion 2b of the package.

### (Evaluation Test of Determination Precision of Pressure)

Next, there will be explained results of effect confirmation tests with using pressure detection units 20 including a tension member 30a having a thickness made smaller than the thickness of the pressure detection portion 23.

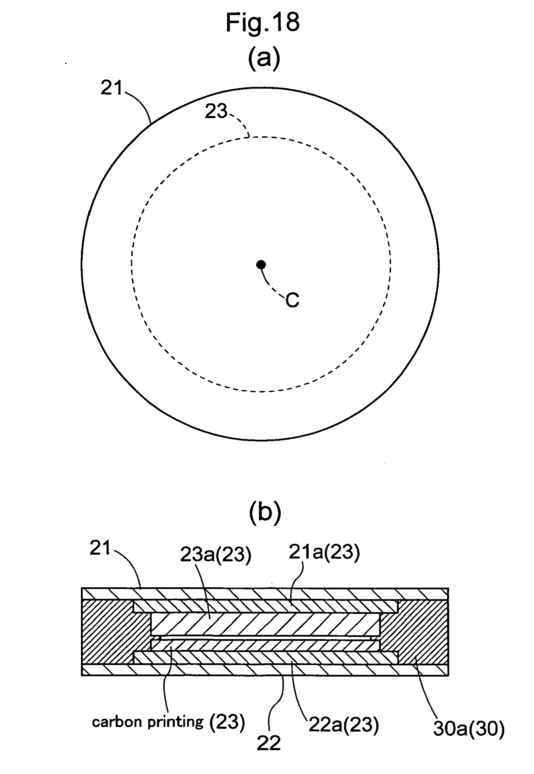

In this, as an embodiment of the pressure detection unit relating to the present invention, as shown in Fig. 18, the pressure detection portion 23 was configured such that a silver electrode 21a, the pressure sensitive ink 23a, carbon printing, and a silver electrode 22b are arranged in this mentioned order between an upper film (first substrate) 21 and a lower film (second substrate) 22. Fifteen samples S1-S15 were made, each of which included a tension member 30a (glue printing) having a thickness smaller than the thickness of the pressure detection portion 23. Further, as comparison examples, fifteen samples S16-S30 were made, each of which included a pressure detection portion 23 similar to the embodiments of the present invention and included a double-sided tape (having acrylic adhesive material applied to both faces) having a thickness greater than the thickness of the pressure detection portion 23 and interposed between an upper film 21 and a lower film 22.

The silver electrodes 21, 22a each had a diameter of 4 mm and a thickness of 10 µm and the pressure sensitive ink 23a had a diameter of 3 mm and a thickness of 20 µm, and the carbon had a diameter of 3 mm and a thickness of 10 µm (the total thickness of the pressure detection portion 23 was 50 µm) and each of these was printed in approximately circular. The tension member 30a (glue printing) in each of Samples S1-S15 had a thickness of 30µm and the thickness of the double-sided tape in each one of Samples S16-30 was 70 µm. As the pressure sensitive ink 23a, the "QTC" (commercial name) manufactured by Peratech Ltd. in U.K. was employed. Incidentally, the upper film 21 was a PET film having a thickness of 50 µm and the lower film 22 comprised a PET film having a thickness of 50 µm and a PET film having a thickness of 38 µm affixed to each other. To the 50 µm thickness PET film in the upper film 21 and the lower film 22, the silver electrodes 21a, 22a were printed and on the 38 µm thickness film of the lower film 22, a bump (not shown) having a diameter of 1 mm and a height of 100 µm was disposed.

After the respective samples S1-S30 was placed on a testing table, a weight was disposed at a center portion C of each sample S1-S30 where the pressure sensitive ink 23a was located and a resistance value was determined for three times from each sample. This operation was repeated for a plurality of times, with varying the weight of the weight and the resistance value in response to each load applied to the pressure sensitive ink was determined.

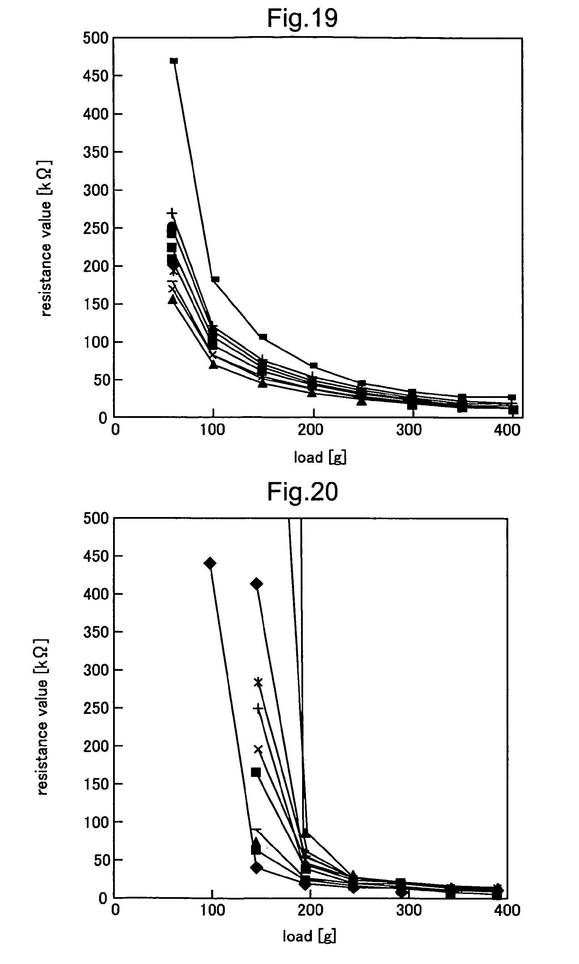

Fig. 19 is a graph showing relationship between resistance values (the average value of the three times of determined resistance values) and loads in samples S1-S15. Fig. 20 is a graph showing relationship between resistance values (the average value of the three times of determined resistance values) and loads in samples S16-S30.

In the embodiments of the present invention (samples S1-S15), as shown in Fig. 19, for a load of about 10 gf or greater, each and every sample exhibited a substantially same resistance value. On the other hand, in the comparison examples (samples S16-S30), as shown in Fig. 20, the smaller the load, the greater irregularity occurred in the resistance value of each sample. This resistance value irregularity was particularly conspicuous when the load was smaller than 200 gf. Incidentally, when the load was not greater than 150 gf, determination of resistance value was not possible.

Fig. 21 is a graph showing relationships between variation coefficients and loads in samples S1-S30. Here, the language "variation coefficient" refers to a value obtained by dividing a standard deviation by an arithmetic average, showing the greater the variation coefficient, the greater the irregularity in the resistance value relative to the load.

In the embodiment examples of the present invention (samples S1-S15), as shown in Fig. 21, even when the load applied to each sample was small, the variation coefficient of the resistance value for each load in each sample was very small. On the other than, in the case of the comparison examples (samples S16-S30), as the load became smaller, the greater the variation coefficient of the resistance value of each sample. This increase in the resistance value irregularity was particularly conspicuous when the load was smaller than 200 gf.

From the above-described test results, it was confirmed that by disposing the tension member 30a having a thickness smaller than the thickness of the pressure detection portion 23 between the first substrate 21 and the second substrate 22, the pressure determination precision can be improved even when the load from the outside is small.

Incidentally, through appropriate combinations of the desired embodiments of the various embodiment modes described above, the advantageous effect of each embodiment mode can be provided.

### Industrial Applicability

The information input apparatus and the pressure detection unit both relating to the present invention can be used advantageously in an electronic instrument, such as a mobile telephone, a smart telephone, a PDA, a car navigation apparatus, a digital camera, a digital video camera, a game machine, and a tablet, in order to provide such electronic instrument with a greater number of functions and to improve its operability.

## Claims

1. An information input apparatus comprising:
a panel member having a touch type information input function:
a package having a support portion for supporting the panel member;
a pressure detection portion provided between/across the panel member and the support portion for detecting pressing operation force to the panel member, and
an initial load applying portion provided between/across the panel member and the support portion and configured to draw the panel member and the support portion toward each other, thereby to apply an initial load to the pressure detection portion.

2. The information input apparatus according to claim 1, wherein said initial load applying portion is formed of an elastic member connected to said panel member and said support portion.

3. The information input apparatus according to claim 1 or 2, wherein either between said pressure detection portion and said panel member or between said pressure detection portion and said support portion, there is provided a load transmission portion configured to receive a load from the panel member or the support portion in a concentrated manner and transmit the load to said pressure detection portion in distribution and configured also to allow a posture change of said panel member or said support portion relative to said pressure detection portion.

4. The information input apparatus according to any one of claims 1-3, wherein said pressure detection portion and said initial load applying portion are provided at least at a portion of the peripheral edge of said panel member.

5. A pressure detection unit for use in an information input apparatus, the unit comprising:
a first substrate;
a second substrate disposed in opposition to said first substrate;
a pressure detection portion disposed between said first substrate and said second substrate for detecting a mutual pressing force of said first substrate and said second substrate; and
an initial load applying portion provided between/across said first substrate and said second substrate for urging said first substrate and said second substrate toward said pressure detection portion, thereby to apply an initial load.

6. The pressure detection unit according to claim 5, wherein said initial load applying portion comprises an elastic member connected to said panel member and said support portion.

7. The pressure detection unit according to claim 5 or 6, wherein said pressure detection portion includes a pair of electrodes disposed between said first substrate and said second substrate and a conductive pressure-sensitive ink disposed between said pair of electrodes and has electric characteristics which varies in accordance with a load applied from the outside.

8. The pressure detection unit according to claim 5 or 6, wherein said pressure detection portion includes a pair of electrodes disposed on one of said first substrate and said second substrate and a conductive pressure-sensitive ink disposed on the other of said first substrate and said second substrate and has electric characteristics which varies in accordance with a load applied from the outside.

9. The pressure detection unit according to any one of claims 5-8, wherein the unit further comprises a load transmission portion provided on at least one of the outer face of said first substrate and the outer face of said second substrate and formed with an area smaller than the contact area between said pressure detection portion and said first substrate or said second substrate.

10. The pressure detection unit according to claim 9, wherein said load transmission portion has a cross section area which is progressively decreased away from the outer surface of either the first substrate or the second substrate on which the load transmission portion is disposed.
